# EUROPÄISCHE PATENTANMELDUNG

(11) **EP 1 995 192 A2**
(43) Veröffentlichungstag der Anmeldung: **26.11.2008**
(21) Anmeldenummer: 08104016.4
(22) Anmeldetag: 19.05.2008
(51) Int. Cl.: B65G 47/51

(54) **Ladesystem für Fluggepäck und Verfahren zum manuellen oder maschinell unterstützten Sortieren**

(30) Priorität: 23.05.2007 DE 102007023909
(71) Anmelder: SIEMENS AKTIENGESELLSCHAFT, 80333 München (DE)
(72) Erfinder: Brütt, Jörn, 90408 Nürnberg (DE); Rosenbaum, Walter, 75116 Paris (FR)

(57) **Zusammenfassung**

Die Erfindung betrifft ein Ladesystem und Ladeverfahren für Fluggepäck, bestehend aus Förderern für lose darauf aufliegende Gepäckstücke, die von einer fernen Aufgabestation zu einer Anzahl von Ladeförderern (1,2) transportiert werden, von denen die Gepäckstücke manuell oder maschinenunterstützt in neben den Ladeförderern (1,2) bereit gestellte Transportfahrzeuge und/oder Transportbehälter (11 bis 13) verladen werden, wobei mindestens jeweils ein Ladeförderer (9) einem von mehreren Flügen bzw. dessen Bestimmungszielen zugeordnet ist und wobei jeder Ladeförderer (1,2) zum Sortieren und Zwischenspeichern der Gepäckstücke aus einem Zuführ- (1) und einem Abführförderer (2) besteht, zwischen denen ein Sortierspeicher (3) mit mehreren Speicherplätzen (3a bis 3e) für jeweils ein Gepäckstück angeordnet ist, die zum Be- und Endladen von an die Zuführ- (1) und Abführförderer (2) anschließenden Transferwagen (4 bzw. 6) bedient werden.

## Beschreibung

Die Erfindung betrifft ein Ladesystem für Fluggepäck, bestehend aus Förderern für lose auf diesen aufliegende Gepäckstücke, die von einer ferneren Aufgabestation zu einer Anzahl von Ladeförderern transportiert werden, von denen die Gepäckstücke manuell oder maschinenunterstützt in neben den Ladeförderern bereitgestellte Transportfahrzeuge und/oder Transportbehälter verladen werden, wobei mindestens jeweils ein Ladeförderer einem von mehreren Flügen bzw. deren Bestimmungszielen zugeordnet ist.

Das Verladen von Fluggepäck am Ende einer weitgehend automatisierten Gepäcksortieranlage erfolgt derzeit überwiegend noch manuell, d.h., das in einem Bereich der Anlage, in der Regel am Check-In, aufgegebenen Fluggepäck wird nach dem Durchfahren der Anlage zu einem Platz transportiert, wo Transportfahrzeuge, sog. Trollys, und/oder Transportbehälter, sog. ULDs, bereit stehen, um die Gepäckstücke aufzunehmen. Die Übergabe des Gepäcks erfolgt von Hand unmittelbar von den Ladeförderern, die häufig in mehreren Reihen parallel nebeneinander angeordnet sind, neben und zwischen denen die Trollys oder ULDs aufgereiht sind. Je nach dem, wie viel Fluggepäck in unterschiedlichen Tageszeiten anfällt, werden mehr oder weniger Arbeiter eingesetzt, die das Fluggepäck vom Band nehmen und in einen oder mehrere der für ein bestimmtes Flugziel bereitstehenden Transportbehälter oder in ein Transportfahrzeug packen. Dabei müssen die Arbeiter nur darauf achten, dass das richtige Gepäckstück in das für das jeweilige Bestimmungsziel bereitgestellte Transportmittel gelangt; denn es erfolgt auch eine Sortierung nach bestimmten Gepäckkriterien. So werden beispielsweise die Gepäckstücke von First-Class-Passagieren ebenso von anderen Gepäckstücken getrennt, wie solche von Transfer-Passagieren mit kurzen Umsteigzeiten. Auch nach weiteren Kriterien wird unterschieden.

Da die Förderbänder zur Aufnahme der Gepäckstücke oft eine große Länge aufweisen und eine Vielzahl von Transportfahrzeugen oder ULDs neben den Transportbändern aufgestellt ist, müssen die mit dem Gepäckverladen beschäftigten Arbeiter häufig große Strecken zurücklegen. Das kostet Zeit und verringert den Durchsatz der Anlage, vor allem, wenn die Gepäckstücke nicht vorsortiert zum Verladeplatz gelangen und die Arbeiter sich ständig zwischen den Transporteinheiten hin- und herbewegen müssen. Dadurch geht viel Zeit verloren, die den Durchsatz der Anlage verringert.

Ein weiteres Problem besteht darin, dass das Fluggepäck häufig sehr schwer ist und oft nur mit Mühe händisch vom Ladeförderer in die Transporteinheit bewegt werden kann. Zwar werden bereits Hilfsmittel zum maschinenunterstützten Verladen der Gepäckstücke ins Flugzeug eingesetzt, dass die Gepäckstücke ohne großen Aufwand in das Flugzeug gelangen, doch wird durch diese Hilfsmittel die Arbeit zwar erleichtert, doch der Durchsatz nicht erhöht.

Aufgabe der vorliegenden Erfindung ist es, ein Ladesystem für Fluggepäck und ein Verfahren zum Laden von Fluggepäck zu schaffen, das einen hohen Durchsatz durch effektives Arbeiten ermöglicht und gleichzeitig die Verladung des Gepäcks von dem Ladeförderer in die bereit gestellten Transportfahrzeuge erleichtert.

Zur Lösung der Aufgabe wird erfindungsgemäß vorgeschlagen, dass jeder Ladeförderer zum Sortieren und Zwischenspeichern der Gepäckstücke aus einem Zuführ- und einem Abführ-Förderer besteht, zwischen denen ein Sortierspeicher mit mehreren Speicherplätzen für jeweils ein Gepäckstück angeordnet ist, die zum Be- und Entladen von an die Zuführ- und Abführförderer anschließenden Transferwagen bedient werden.

Grundgedanke der vorliegenden Erfindung ist das Zwischenspeichern und gleichzeitige Sortieren der Gepäckstücke, so dass diese in nach Sortierkriterien ausgewählter Reihenfolge in das Transportmittel geladen werden können.

Vorzugsweise ist der Sortierspeicher quer zu und zwischen dem Zuführ- und Abführförderern angeordnet, wobei jeweils ein Transferwagen parallel zu dem Sortierspeicher zwischen diesem und dem Zuführ- bzw. Abführförderer verfahrbar ist. Der Sortierspeicher entkoppelt somit den Zuführförderer vom Abführförderer und ermöglicht durch das Zwischenspeichern ein sinnvolles Sortieren des Fluggepäcks, beispielsweise nach dem Kriterium First-Class oder Transfer-Gepäck.

In einem ausgestalteten Merkmal der Erfindung ist vorgesehen, dass die Transferwagen jeweils mit einem Förderband bestückt sind, die in einer Übernahme- bzw. Übergabestellung des Transferwagens eine Fortsetzung des Zuführ- bzw. Abführförderers bilden. In seiner Koppelstellung, die gleichzeitig der Übernahme- bzw. Übergabestellung entspricht, stellt somit der Transferwagen eine Fortsetzung des Zuführ- bzw. Abführbandes dar und kann das Gepäckstück unmittelbar übernehmen bzw. auf das Abförderband übergeben.

Erfindungsgemäß sind die Transferwagen auf Schienen verfahrbar, die neben dem Sortierspeicher am Boden verlegt sind. Durch Verfahren auf diesen Schienen kann der Transferwagen mehrere Speicherplätze des Sortierspeichers bedienen.

Vorzugsweise weist der Sortierspeicher mindestens drei, vorzugsweise fünf oder mehr Speicherplätze auf, wobei es Sinn macht, die Anzahl der Speicherplätze in einer ungeraden Zahl zu planen, damit, ausgehend von einer zentralen Mittelstellung, gleich viele Speicherplätze nach beiden Seiten bedient werden können.

Erfindungsgemäß ist der Sortierspeicher in einer gemeinsamen Ebene mit der Förderebene der Zuführ- bzw. Abführförderer angeordnet. Das bedeutet, dass das Gepäck keine Höhenunterschiede zu überbrücken hat sondern direkt von dem Zuführförderer über den angedockten Transferwagen in den Sortierspeicher, ggf. nach vorherigem Verschieben des Transferwagens, überführt werden kann. Dazu ist nach einem weiteren Merkmal der Erfindung jeder Speicherplatz des Sortierspeichers mit einem individuell steuerbaren Förderband ausgestattet, dessen Förderrichtung der der Förderbänder auf dem Transferwagen entspricht. Somit kann unmittelbar vom Transferwagen ein Gepäckstück in den Speicherplatz eingeschleust werden und dort zwischengespeichert werden, bis der Abruf auf der gegenüberliegenden Seite von dem dort verfahrbaren Transferwagen erfolgt, indem das Förderband des Speicherplatzes zum Ausschleusen des Gepäckstückes angetrieben wird, bis dieses vom Förderband des Transferwagens übernommen ist.

Im Rahmen der Erfindung ist es aber auch möglich, den Sortierspeicher mit mehreren übereinanderliegenden Ebenen auszustatten, dementsprechend würden die Transferwagen mit Hubeinrichtungen, beispielsweise Scherentischen ausgestattet, um die verschiedenen Sortierspeicherebenen zu bedienen.

Um sicherzustellen, dass die Gepäckstücke in einer Ausrichtung den Speicherplatz erreichen, die eine geordnete Ablage ermöglicht, ist nach einem weiteren Merkmal der Erfindung zwischen dem Zuförderband und dem Transferwagen eine Vorrichtung zum Drehen und/oder Wiegen des Gepäckstückes in der Förderebene vorgesehen. Das Wiegen des Gepäckstückes kann bereits vorher erfolgt sein oder aber an dieser Stelle vorgenommen werden, um ein sinnvolles Packen der Gepäckstücke im Flugzeug zu ermöglichen.

Um ein geordnetes Ablegen der Gepäckstücke in den Transportbehältern zu ermöglichen, müssen die Sortierkriterien der einzelnen Gepäckstücke bekannt sein. Aus diesem Grund wird erfindungsgemäß im Verlauf des Zuförderbandes eine Vorrichtung zum Identifizieren des Gepäckstückes vorgesehen, die in der Lage ist, Informationen über das Gepäckstück aus entsprechenden Informationsträgern an den Gepäckstücken auszulesen.

Das Abförderband erstreckt sich nach einem Merkmal der Erfindung entlang mehrerer aufstellbarer Transportfahrzeuge und/oder Transportbehälter, zwischen denen und dem Abförderband parallel zu letzterem eine Ladevorrichtung verfahrbar ist, mit der das Gepäck vom Abförderband an das Transportfahrzeug oder den Transportbehälter übergebbar ist. Diese Ladevorrichtung dient der Arbeitserleichterung für die die Transporteinrichtungen beladenden Arbeiter, sie ermöglicht ein Übergeben des Gepäckstückes unmittelbar vom Abförderband in das Transportfahrzeug oder den Transportbehälter.

In einer günstigen Ausgestaltung ist die Ladevorrichtung auf Schienen verfahrbar und, vorzugsweise von Hand, auf diesen verschiebbar.

Um die Gepäckstücke laden zu können, ist erfindungsgemäß die Ladevorrichtung mit einem teleskopierbaren und/oder schwenkbaren Ausleger ausgestattet, der in das Transportfahrzeug oder den Transportbehälter hineinreicht.

Zum günstigen Stapeln der Gepäckstücke kann nach einem weiteren ausgestaltendem Merkmal der Erfindung die Ladevorrichtung oder können Teile davon heb- und senkbar sein.

In einer besonders günstigen Ausgestaltung der Erfindung ist die Ladevorrichtung ein quer zum Abförderband ausgerichtetes Förderband, unter dem ein in Richtung des zu beladenen Transportfahrzeuges oder Transportbehälters an einem Träger ausfahrbares zweites Förderband angeordnet ist, das in der horizontalen Ebene um mindestens 90° verschwenkbar ist. Mit der Verschwenkbarkeit des zweiten Förderbandes wird erreicht, dass Gepäckstücke auch in Ecken des Transportmittels geladen werden können, die nicht unmittelbar in Transportrichtung des ersten Förderbandes liegen.

Um zu erreichen, dass die Gepäckstücke vom Abförderband auf das Fördeband der Ladevorrichtung gelangen, ist erfindungsgemäß ein das Abförderband übergreifender Abweiser vorgesehen, der gemeinsam mit der Ladevorrichtung entlang des Abförderbandes verfahrbar ist und der das Gepäckstück vom Abförderband auf die Ladevorrichtung überführt. Derartige Abweiser sind im Prinzip bekannt, sie können beispielsweise aus in der Vertikalebene umlaufenden Förderbändern bestehen, die das Gepäckstück in die gewollte Richtung hin zur Ladevorrichtung lenken.

Ein Verfahren zum manuellen oder maschinell unterstützten Sortieren und Laden von Fluggepäck in bereitgestellte Transportfahrzeuge und/oder Transportbehälter nach einem oder mehreren Vorrichtungsansprüchen ist dadurch gekennzeichnet, dass bestimmte auf an den Gepäckstücken angebrachten Informationsträgern gespeicherte Sortierkriterien auf dem Zuförderer ausgelesen und in einem Anlagenrechner gespeichert werden, bevor die jeweiligen Gepäckstücke definierten Speicherplätze des Sortiersystems zugeordnet werden, dass Gepäckstücke gleicher Sortierkriterien anhand der in dem Anlagenrechner gespeicherten Daten aufeinander folgend aus dem Sortierspeicher abgerufen und über das Abförderband der Ladevorrichtung zugeleitet werden, die die Gepäckstücke gleicher Sortierkriterien in ein diesen zugeordnetes Transportfahrzeug und/oder einen Transportbehälter verlädt und dass alles weiteren Gepäckstücke in der gleichen Weise hinsichtlich anderer Sortierkriterien sortiert, gespeichert und anschließend jeweils anderen zugeordneten Fahrzeugen und/oder Transportbehältern zugeleitet werden.

Das Verfahren sieht ein Zwischenspeichern und gleichzeitiges Sortieren der nach bestimmten Kriterien eingeteilten Gepäckstücke vor. Die auf dem Zuförderer zunächst in ungeordneter Reihenfolge ankommenden Gepäckstücke werden hinsichtlich ihrer Informationen ausgelesen, wobei die Informationen als Barcode oder RFID-Informationen vorliegen. Die ausgelesenen Informationen werden in einem Anlagenrechner abgelegt und gestatten eine Zuordnung der Gepäckstücke nach den ausgelesenen Sortierkriterien. Nach einem ggf. erfolgten Drehen der Gepäckstücke in eine für den späteren Sortiervorgang sinnvolle Ausrichtung, wird das Gepäckstück auf den am Ende des Zuförderbandes wartenden Transferwagen übergeben und von diesem, ggf. nach Querverschiebung, in einen der Speicherplätze abgelegt. Der Speicherplatz wird dem Anlagenrechner zugeleitet; die Information wird mit der Information über die Sortierkriterien zusammengeführt. Andere Speicherplätze werden mit nachfolgendem Gepäck in gleicher Weise gefüllt. Sobald mehrere Gepäckstücke gleicher Sortierkriterien in dem Sortierspeicher liegen, werden diese nacheinander aus dem Sortierspeicher ausgeschleust und über das Abförderband und den Abweiser der Ladevorrichtung zur Verfügung gestellt, die diese Gepäckstücke in den richtigen dafür vorgesehenen Transportbehältern oder das richtige Transportfahrzeug abgibt. Bereits während des Ausschleusens von Gepäckstücken gleicher Sortierkriterien werden weitere Gepäckstücke vom Zuförderer an den Transferwagen übergeben und in inzwischen geleerten Speicherplätzen abgelegt. Ist eine Anzahl von Gepäckstücken mit anderen Sortierkriterien im Speicher abgelegt, so wird die Ladevorrichtung zusammen mit dem Abweiser vor ein anderes Transportmittel verschoben, die Gepäckstücke gleicher Sortierkriterien werden nacheinander aus dem Sortierspeicher abgerufen und diesem Wagen zugeführt. Ein ständiges Hin- und Herwechseln der Ladevorrichtung entfällt dadurch, dass eine Vorsortierung der Gepäckstücke stattfindet und ein Beladen in Gruppen von Gepäckstücken mit gleichen Sortierkriterien erfolgt.

Ein Ausführungsbeispiel der Erfindung ist in der Zeichnung dargestellt und nachfolgend beschrieben. Es zeigen:
- Figuren 1 und 2: mehrere Sequenzen eines Ladevorganges,
- Figur 3: eine alternative Ausführung eines Ladesystems mit zwei Abförderbändern
- Figur 4: die Ladevorrichtung nach der Erfindung schematisch in der Seitenansicht und
- Figur 5: die Ladevorrichtung nach der Erfindung schematisch in der Draufsicht.

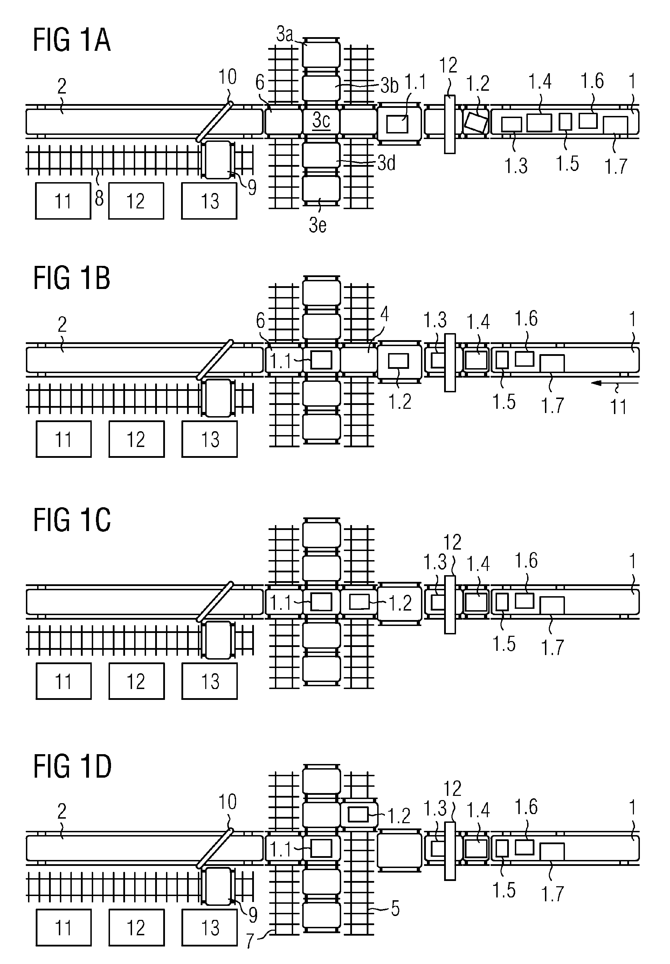

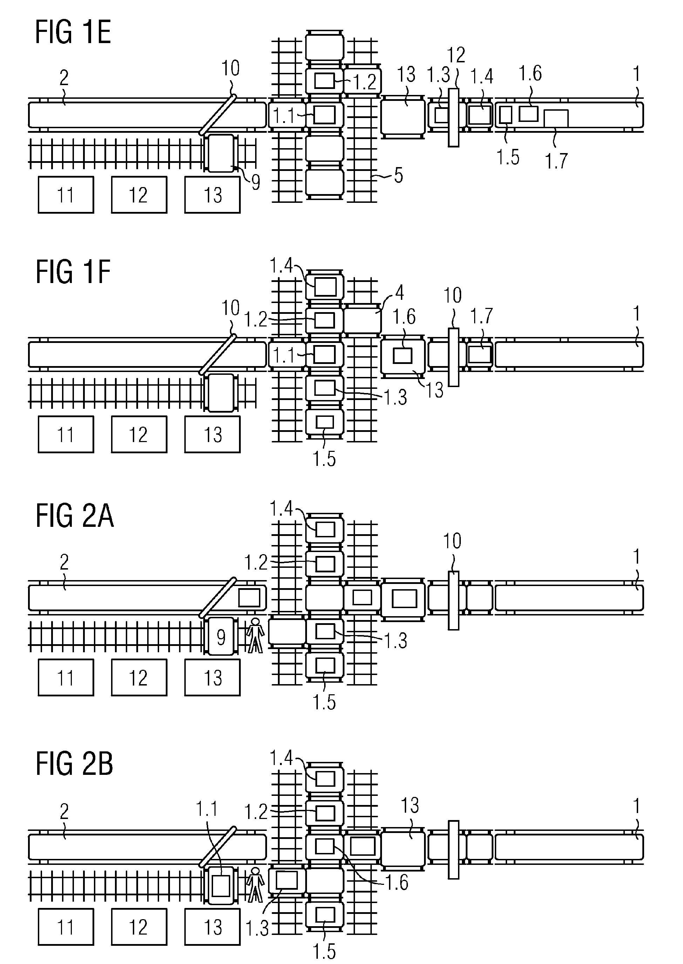

In Figur 1 sind sechs Sequenzen beim Beladen von Fluggepäck dargestellt. In allen Einzelzeichnungen ist das Zuförderband 1 und das Abförderband 2 erkennbar, zwischen denen sich, in Quererstreckung dazu, der Sortierspeicher 3 befindet. Der Sortierspeicher weist im Ausführungsbeispiel fünf Speicherplätze 3a bis 3e auf, wobei jeder Speicherplatz aus einem Förderband besteht, dessen Obertrum (in der Zeichnung) von rechts nach links bewegbar ist. Zwischen dem Zuführförderer 1 und dem Sortierspeicher 3 ist der mit 4 bezeichneten Transferwagen zu erkennen, der auf den Schienen 5 quer zum Zuführförderer 1 verfahrbar ist und vor jeweils einem der Speicherplätze 3a bis 3e positionierbar ist. Ein gleichartiger Transferwagen 6 ist auf der gegenüberliegenden Seite des Sortierspeichers 3, ebenfalls auf Schienen 7 verfahrbar, angeordnet. Beide Transferwagen 4 und 6 tragen Förderbänder, die in gleicher Richtung wie die Zu- und Abführförderer und Förderer der Speicherplätze 3a bis 3e umlaufen.

Der Abführförderer 2 erstreckt sich in der Zeichnungsebene nach links, parallel zu dem Abführförderer 2 verläuft die Schiene 8 auf der die Ladevorrichtung 9 entlang dem Abführförderer 2 verfahrbar ist. Mit der Ladevorrichtung 9 ist der Abweiser 10 verbunden, der sich beim Verschieben der Ladevorrichtung 9 mit dieser bewegt und stets den Abführförderer 2 übergreift. Unterhalb der Schiene 8 sind drei Transportbehälter (ULDs) erkennbar, die mit 11, 12 und 13 bezeichnet sind.

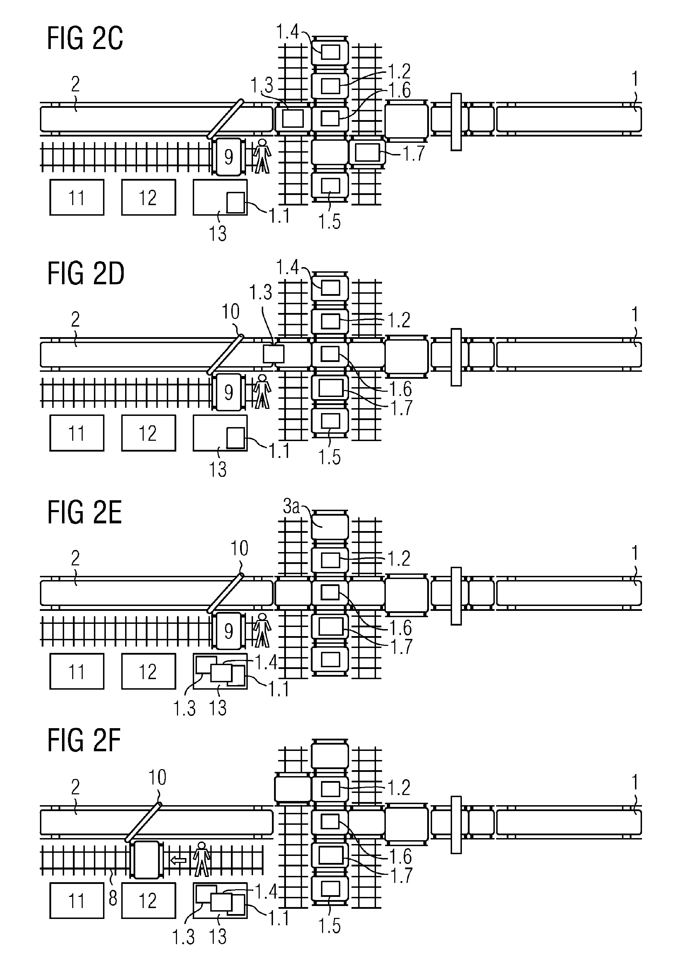

Die vorstehend beschriebenen Bauteile des Ladesystems sind in allen dargestellten Sequenzen a bis f der Figuren 1 und 2 gleich. In der Praxis sind mehrere dieser Systeme nebeneinander angeordnet, d.h. eine Vielzahl von Zu- und Abführförderern erstrecken sich parallel nebeneinander am Ende einer Förderbahn und werden je nach Anzahl der abgehenden Flüge belegt. In Figur 1a sind sieben Gepäckstücke erkennbar, die mit 1.1 bis 1.7 bezeichnet sind. Sie werden in Transportrichtung 11 zunächst durch die Lesevorrichtung 12 transportiert, wo die am Gepäck angebrachten Informationen über die jeweiligen Sortierkriterien ausgelesen werden. In der Drehstation 13 werden die Gepäckstücke ggf. ausgerichtet. In der Figur 1a ist das Gepäckstück 1.2 noch ungerichtet auf dem Band dargestellt, in der Drehstation 13 wurde das Gepäckstück 1.2 ausgerichtet, wie in Figur 1b erkennbar ist. In Figur 1b ist auch erkennbar das Gepäckstück 1.1 bereits über den Förderer des Transferwagens 4 in den Speicherplatz 3c des Sortierspeichers 3 gelangt und dort abgelegt worden. In Bild 1c ist das Gepäckstück 1.2 von der Drehvorrichtung 13 an den Transferwagen 4 übergeben worden, der wie in Figur 1d erkennbar nach rechts (in der Zeichnung nach oben) verschoben wurde. Figur 1e zeigt das Gepäckstück 1.2, jetzt auf einem zweiten Speicherplatz 3b des Sortierspeichers 3 abgelegt. Figur 1f hat mehrere Sequenzen übersprungen, jetzt liegen 5 Gepäckstücke in dem Sortierspeicher 3, so dass alle Speicherplätze 3a bis 3e belegt sind.

Es wird davon ausgegangen, dass die Gepäckstücke 1.1, 1.3 und 1.4 gleiche Sortierkriterien aufweisen, also beispielsweise First-Class-Gepäckstücke sind, die in den Transportbehälter 13 geladen werden sollen. Zu diesem Zweck ist die Ladevorrichtung 9 auf der Schiene 8 gegenüber den Transportbehälter 13 gefahren, der Abweiser 10 steht in entsprechender Position. Im Folgenden werden die Gepäckstücke 1.1, 1.3, und 1.4 aus dem Sortierspeicher 3 abgerufen, was in den Sequenzen der Figur 2a bis 2f dargestellt ist. In Figur 2e sind erkennbar die drei Gepäckstücke 1.1, 1.3 und 1.4 mit gleichen Sortierkriterien im ULD 13 angekommen, in der Zwischenzeit wurden über den Transferwagen 4 die frei gewordenen Plätze 3d und 3c bereits mit neuen Gepäckstücken belegt, die, sobald sich mehrere Gepäckstücke ebenfalls gleicher Sortierkriterien gesammelt haben, in gleicher Weise abgerufen werden und über den Transferwagen 6 zum Abführförderer 2 transferiert werden. In Figur 2f wurde erkennbar die Ladevorrichtung 9 auf der Schiene 8 von Hand in Pfeilrichtung verschoben worden und steht nun in Front zu dem Transportbehälter 12, in dem Gepäckstücke anderer Sortierkriterien gesammelt werden. Auf diese Weise ermöglicht die Erfindung einen höheren Durchsatz als bisher, weil stets mehrere Gepäckstücke gleicher Sortierkriterien zusammengefasst werden, was durch die Einrichtung des Sortierspeichers möglich wird.

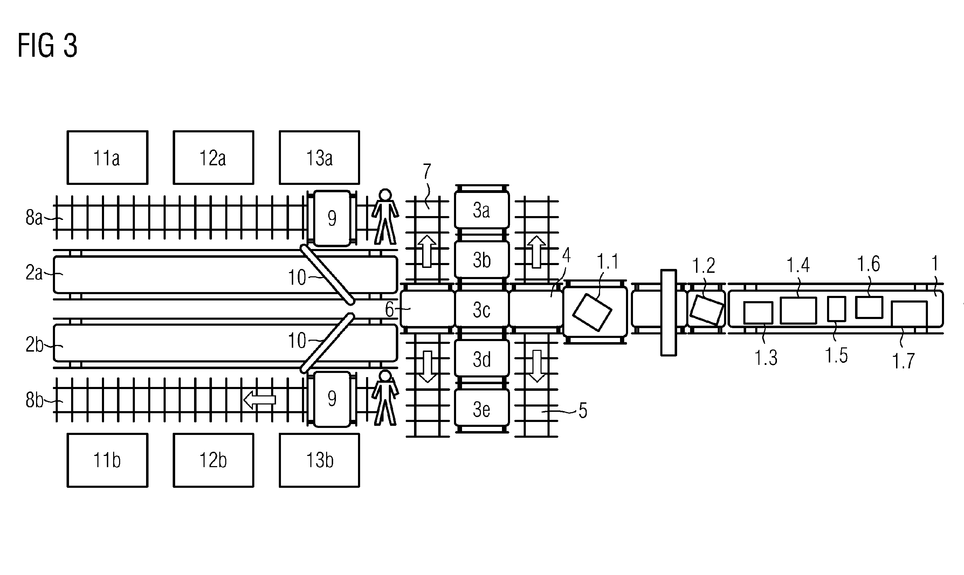

In Figur 3 ist eine Ausführung dargestellt, bei der zwei Abführförderer 2a und 2b bei ansonsten gleicher Funktionalität der Anlage vorgesehen sind. Durch diese Lösung lassen sich gleichzeitig 6 Transportbehälter 11a, 12a, 13a und 11b, 12b und 13b laden. Die Ladevorrichtung ist zu diesem Zweck doppelt vorhanden, so dass eine noch schnellere Beladung der Transportbehälter oder Transportfahrzeuge ermöglicht wird.

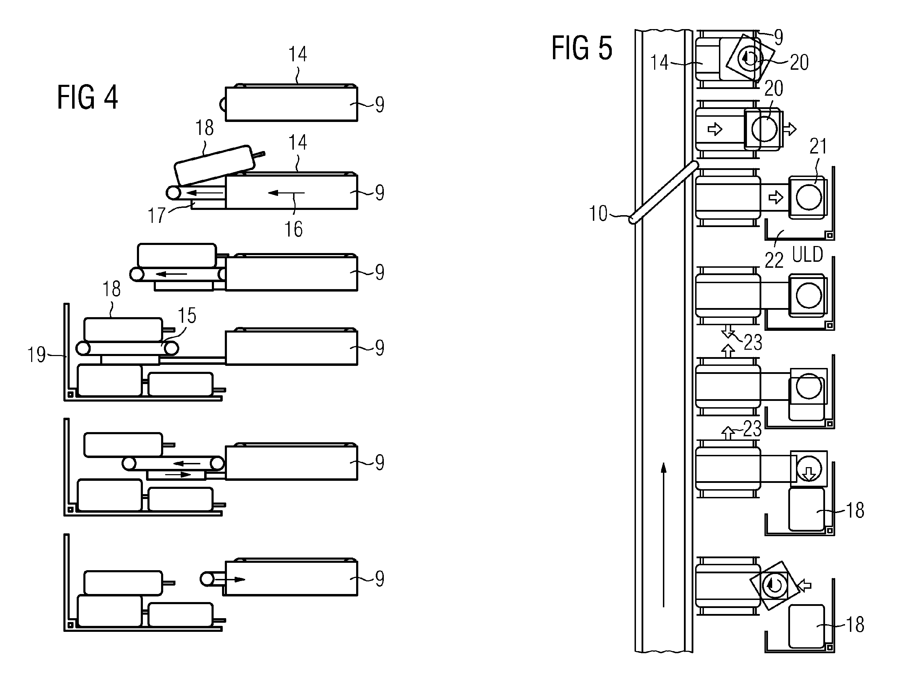

Um die Gepäckstücke von der Ladevorrichtung ohne Krafteinsatz in die Transportbehälter oder Transportfahrzeuge zu überführen ist, wie in Figur 4 dargestellt, die Ladevorrichtung selbst als Förderer 14 ausgebildet, der in Pfeilrichtung 16 angetrieben ist. Unterhalb des Förderers 14 ist an einem Träger 17 ein weiterer Förderer 15 ausfahrbar, auf den das Gepäckstück 18 geführt wird. Durch weiteres Ausfahren des Trägers 17 mit dem Förderband 15 gelangt das Gepäckstück so in das Innere des Transportbehälters, das bei 19 angedeutet ist und wird dort durch Antreiben des Förderbandes 15 in Pfeilrichtung an vorgesehener Stelle abgeworfen. Im Anschluss daran fährt das Förderband 15 unterhalb des Förderbandes 14 zurück und die Vorrichtung kann verschoben werden.

In Figur 5 ist die Ladevorrichtung 9 in der Draufsicht dargestellt. Sie schließt an das Abförderband 2 an, das in der Darstellung durchgehend gezeichnet ist, während die Ladevorrichtung 9 in sieben Sequenzen des Ladevorganges dargestellt ist. In der oberen Darstellung ist erkennbar unterhalb des Förderers 14 der weitere Förderer 15 positioniert, der an seinem frei ausragenden Ende eine Drehscheibe 20 trägt, die ihrerseits eine Auflage 21 für das Gepäckstück 18 trägt. Die Drehscheibe ist um eine vertikal (senkrecht zur Zeichnungsebene) verlaufende Achse drehbar, die Auflage 21 gestattet dadurch nach Positionierung in der entsprechenden Verdrehstellung das Abwerfen des Gepäckstückes 18 in jeder Richtung, auch seitlich in den Eckbereiche 22 des ULD's. Nach Abwerfen des Gepäckstückes 18 verschwenkt die Drehscheibe 20 die Auflage 21 zurück in die Ausgangsstellung, in der der Förderer 15 unter den Förderer 14 zurückgezogen wird. Die Ladevorrichtung, die in Pfeilrichtung 23 parallel zum Abführförderer verfahrbar und zusätzlich heb- und senkbar ist, gestattet mittels der Teleskopierbarkeit der Förderer 14 und 15 und durch das Verdrehen der Auflage 21 um die vertikale Drehachse ein Beladen der ULDs in allen Ebenen und Ablagepositionen des Gepäcks in dem ULD.

## Patentansprüche

1. Ladesystem für Fluggepäck, bestehend aus Förderern für lose auf diesen aufliegende Gepäckstücke, welche von einer ferneren Aufgabestation zu einer Anzahl von Ladeförderern transportiert werden, von denen die Gepäckstücke manuell oder maschinenunterstützt in neben den Ladeförderern bereit gestellte Transportfahrzeuge und/oder Transportbehälter verladen werden, wobei mindestens jeweils ein Ladeförderer einem von mehreren Flügen bzw. dessen Bestimmungszielen zugeordnet ist,
**dadurch gekennzeichnet,**
**dass** jeder Ladeförderer (L) zum Sortieren und Zwischenspeichern der Gepäckstücke aus einem Zuführ- (1) und einem Abführförderer (2) besteht, zwischen denen ein Sortierspeicher (3) mit mehreren Speicherplätzen (3a bis 3e) für jeweils ein Gepäckstück angeordnet ist, die zum Be- und Endladen von an die Zuführ- (1) und Abführförderer (2) anschließenden Transferwagen (4,6) bedient werden.

2. Ladesystem für Fluggepäck nach Anspruch 1,
**dadurch gekennzeichnet,**
**dass** der Sortierspeicher (3) quer zu und zwischen den Zuführ-(1) und Abführförderer (2) angeordnet ist und jeweils ein Transferwagen (4,6) parallel zu dem Sortierspeicher (3) zwischen diesem und dem Zuführ- (1) bzw. Abführförderer (2) verfahrbar ist.

3. Ladesystem für Fluggepäck nach Anspruch 2,
**dadurch gekennzeichnet, dass**
die Transferwagen (4,6) jeweils mit einem Förderband bestückt sind, die in einer Übernahme- bzw. Übergabestellung des Transferwagens (4 bzw. 6) eine Fortsetzung des Zuführ- (1) bzw. Abführförderers (2) bilden.

4. Ladesystem für Fluggepäck nach Anspruch 2 und 3,
**dadurch gekennzeichnet, dass**
die Transferwagen (4,6) auf Schienen (5,7) verfahrbar sind.

5. Ladesystem für Fluggepäck nach Anspruch 1 bis 4,
**dadurch gekennzeichnet,**
**dass** der Sortierspeicher (3) mindestes drei, vorzugsweise fünf oder mehr Speicherplätze (3a bis 3e) aufweist.

6. Ladesystem für Fluggepäck nach Anspruch 1 bis 5,
**dadurch gekennzeichnet,**
**dass** der Sortierspeicher (3) in einer gemeinsamen Ebene mit der Förderebene der Zuführ- (1) bzw. Abführförderer (2) angeordnet ist.

7. Ladesystem für Fluggepäck nach Anspruch 5,
**dadurch gekennzeichnet,**
**dass** jeder Speicherplatz (3a bis 3e) des Sortierspeichers (3) mit einem individuell steuerbaren Förderband ausgestattet ist, dessen Förderrichtung der der Förderbänder auf den Transferwagen (4,6) entspricht.

8. Ladesystem für Fluggepäck nach Anspruch 1 bis 7,
**dadurch gekennzeichnet,**
**dass** zwischen dem Zuförderband (1) und dem Transferwagen(4) eine Vorrichtung (13) zum Drehen in der Förderebene und/oder Wiegen des Gepäckstückes vorgesehen ist.

9. Ladesystem für Fluggepäck nach Anspruch 1 bis 8,
**dadurch gekennzeichnet,**
**dass** im Verlauf des Zuförderbandes (1) eine Vorrichtung (12) zum Identifizieren des Gepäckstückes vorgesehen ist.

10. Ladesystem für Fluggepäck nach Anspruch 1,
**dadurch gekennzeichnet,**
**dass** das Abförderband (2) sich entlang mehrerer aufstellbaren Transportfahrzeuge und/oder Transportbehälter (11 bis 13) erstreckt, zwischen denen und dem Abförderband (2) parallel zu letzterem eine Ladevorrichtung (9) verfahrbar ist, mit der das Gepäck vom Abförderband (2) an das Transportfahrzeug oder den Transportbehälter (11, 12 oder 13) übergebbar ist.

11. Ladesystem für Fluggepäck nach Anspruch 10,
**dadurch gekennzeichnet,**
**dass** die Ladevorrichtung (9) auf Schienen (8) verfahrbar ist.

12. Ladesystem für Fluggepäck nach Anspruch 10 und 11,
**dadurch gekennzeichnet,**
**dass** die Ladevorrichtung (9) mit einem teleskopierbaren und/oder schwenkbaren Ausleger in das Transportfahrzeuge oder den Transportbehälter (11, 12 oder 13) hinein reicht.

13. Ladesystem für Fluggepäck nach Anspruch 10 bis 12,
**dadurch gekennzeichnet,**
**dass** die Ladevorrichtung (9) oder Teile davon heb- und senkbar ist bzw. sind.

14. Ladesystem für Fluggepäck nach Anspruch 10 bis 13,
**dadurch gekennzeichnet,**
**dass** die Ladevorrichtung (9) ein quer zum Abförderband (2) ausgerichtetes Förderband (14) ist, unter dem ein in Richtung des zu beladenden Transportfahrzeuges oder Transportbehälters (11, 12 oder 13) an einem Träger ausfahrbares zweites Förderband (15) angeordnet ist, das in der horizontalen Ebene um mindestens 90° verschwenkbar ist.

15. Ladesystem für Fluggepäck nach einem der Ansprüche 1 bis 14,
**gekennzeichnet durch**
einen das Abförderband (2) übergreifenden Abweiser (10), der gemeinsam mit der Ladevorrichtung (9) entlang des Abförderbandes (2) verfahrbar ist und der das Gepäckstück vom Abförderband (2) auf die Ladevorrichtung (9) überführt.

16. Verfahren zum manuellen oder maschinell unterstützten Sortieren und Laden von Fluggepäck in bereit gestellte Transportfahrzeuge und/oder Transportbehälter unter Verwendung einer Vorrichtung nach einem oder mehreren der Ansprüche 1 bis 15,
**dadurch gekennzeichnet,**
**dass** bestimmte auf an den Gepäckstücken angebrachten Informationsträgern gespeicherte Sortierkriterien auf dem Zuförderer ausgelesen und in einem Anlagenrechner gespeichert werden, bevor die jeweiligen Gepäckstücke definierten Speicherplätzen des Sortierspeichers zugeordnet werden,
**dass** Gepäckstücke gleicher Sortierkriterien anhand der in dem Anlagenrechner gespeicherten Daten aufeinanderfolgend aus dem Sortierspeicher abgerufen und über das Abförderband der Ladevorrichtung zugeleitet werden, die die Gepäckstücke gleicher Sortierkriterien in ein diesen zugeordnetes Transportfahrzeug und/oder einen Transportbehälter verlädt und dass alle weitern Gepäckstücke in gleicher Weise hinsichtlich anderer Sortierkriterien sortiert, gespeichert und anschließend jeweils anderen zugeordneten Transportfahrzeugen und/oder Transportbehälter zugeleitet werden.

17. Verfahren nach Anspruch 14,
**dadurch gekennzeichnet,**
**dass** die Gepäckstücke vor dem Überleiten auf den dem Sortierspeicher zugeordneten Transferwagen in eine für die Übergabe an den Speicherplatz geeignete Position gedreht werden.
